Europäisches Patentamt

European Patent Office

Office européen des brevets

(11) Veröffentlichungsnummer: **0 111 816**
A1

# (12) EUROPÄISCHE PATENTANMELDUNG

(21) Anmeldenummer: 83112212.2

(22) Anmeldetag: 05.12.83

(51) Int. Cl.³: **G 21 C 17/06**

(30) Priorität: 16.12.82 DE 3246642

(43) Veröffentlichungstag der Anmeldung:
27.06.84 Patentblatt 84/26

(84) Benannte Vertragsstaaten:
BE CH DE FR GB IT LI NL SE

(71) Anmelder: INTERATOM Internationale Atomreaktorbau GmbH
Friedrich-Ebert-Strasse
D-5060 Bergisch Gladbach 1(DE)

(72) Erfinder: Gestermann, Fritz, Dr. Dipl.-Phys.
Berliner Strasse 83
D-5090 Leverkusen 1(DE)

(72) Erfinder: Classen, Josef, Dipl.-Ing.
Eschweilerstrasse 6
D-5112 Baseweiler(DE)

(74) Vertreter: Mehl, Ernst, Dipl.-Ing. et al,
Postfach 22 01 76
D-8000 München 22(DE)

(54) Verfahren und Vorrichtung zum Auffinden eines defekten Brennstabes in einem Bündel.

(57) Die vorliegende Erfindung dient zum Auffinden eines defekten Brennstabes in einem ausgebauten Brennelement ohne systematisches Zerlegen des Brennstabbündels. Dazu wird vorgeschlagen, mit einer Probeabstrichvorrictung (10) im Bereich der Spitze jedes Brennstabes etwa gleich viel Material abzutragen und die Radioaktivitäten aller Proben relativ zueinander zu bestimmen. Am Ort der erhöhten Radioaktivität ist der defekte Brennstab zu suchen. Als Probenentnahmevorrichtung wird eine elastiche Matte (10) mit lippenförmig (13) unrandeten Öffnungen (12), welche nach dem Muster der Brennstäbe angeordnet sind, vorgeschlagen. Mit dieser Matte kann eine gleichmäßige Probenentnahme verwirklicht werden und ein anschließender Nachweis der Aktivität mit Hilfe einer Fotoplatte ist vorteilhaft.

FIG 2

82 P 6744 E    0111816

INTERATOM

Internationale Atomreaktorbau GmbH

D-5060 Bergisch Gladbach 1

## Verfahren und Vorrichtung zum Auffinden eines defekten Brennstabes in einem Bündel

Die vorliegende Erfindung betrifft ein Verfahren und eine Vorrichtung zum Auffinden eines defekten Brennstabes in einem Bündel bei einem als schadhaft bekannten, ausgebauten Brennelement eines Kernreaktors. Beim Betrieb eines Kernreaktors kann es vorkommen, daß ein Brennelement schadhaft wird und zur Vermeidung von stärkeren Kontaminationen des Kühlmittelkreislaufs ausgewechselt wird. Ein solches Brennelement besteht aus einer Vielzahl von in einem Bündel angeordneten Brennstäben, von welchen im Normalfall nur eines leck geworden ist. Es besteht daher ein großes Interesse daran, diesen defekten Brennstab zu ermitteln und das Brennelement durch Austausch dieses Brennstabes wieder einsatzbereit zu machen.

Bisher werden dazu nach und nach die einzelnen Brennstäbe aus dem Bündel herausgezogen, bis der defekte Brennstab, welcher optisch durch ein aufgerissenes Hüllrohr zu erkennen ist, gefunden wird. Da dieser Ablauf wegen der Radioaktivität des Brennelementes in einer abgeschirmten Kammer oder unter Wasser mit Hilfe von Manipulatoren erfolgen muß, ist die Reparatur eines Brennelementes sehr zeitaufwendig. Bei mit schützenden Oberflächenschichten versehenen Brennstäben sollen außerdem unnötige Handhabungen, die zu einer Beschädigung der Beschichtung führen könnten, vermieden werden.

Aufgabe der vorliegenden Erfindung ist es, die Reparaturzeit eines Brennelementes und die dazu nötigen Arbeitsgänge zu vermindern, indem eine Lokalisierung des defekten 18.11.82 Nw/Pa

-2-

Brennstabes ohne Herausziehen der einzelnen Stäbe erfolgt.

Zur Lösung dieser Aufgabe wird gemäß dem Hauptanspruch vorgeschlagen, mit einer Probeabstrichvorrichtung im Bereich der Spitze jedes Brennstabes etwa gleich viel Material abzutragen und die Radioaktivitäten aller dieser Proben relativ zueinander zu bestimmen. Bei diesem Verfahren liegt die Kenntnis zugrunde, daß das Kühlmittel im Brennelement nahezu gleichmäßig an den Brennstäben entlangströmt und der Anteil der Quervermischung gering ist. Die aus einem defekten Brennstab austretenden radioaktiven Isotope werden daher vorzugsweise entlang diesem Brennstab befördert und lagern sich zu einem Bruchteil, unter Umständen unterstützt durch Abrißwirbel, im Bereich seiner Spitze ab. Dies hat zur Folge, daß der defekte Brennstab an seiner Spitze auch die höchste Radioaktivität durch Ablagerungen aufweist. Wegen der hohen Strahlung, die ohnehin aus dem Inneren jedes Brennstabes und den Hohlräumen zwischen den Brennstäben kommt, ist es jedoch nicht möglich, die Radioaktivität an der Spitze direkt mit Hilfe eines Detektors zu messen. Deshalb muß zunächst von jeder Spitze eine Probe entnommen werden, was natürlich nur dann erfolgversprechend ist, wenn es gelingt, von jeder Spitze unter gleichen Bedingungen etwa gleich viel Material abzutragen. In diesem Falle stammt die Probe mit der höchsten Radioaktivität mit großer Wahrscheinlichkeit von der Spitze des defekten Brennstabes und auch die benachbarten Brennstäbe werden noch etwas erhöhte Radioaktivität aufweisen. Auf diese Weise ist es möglich, den Schwerpunkt der radioaktiven Ablagerungen an den Spitzen der Brennstäbe zu ermitteln, selbst wenn einmal eine Probe aus dem Rahmen fallen sollte.

-3-

In weiterer Ausgestaltung der Erfindung wird vorgeschlagen, die Proben mit Hilfe einer in ihrer Form
dem Brennstabbündel angepaßten Abstrichvorrichtung
alle gleichzeitig und unter möglichst gleichen Bedingungen zu entnehmen. Die Abstrichvorrichtung
wird anschließend dann auf eine $\alpha$-, $\beta$- oder
$\gamma$-strahlungsempfindliche Fotoplatte gelegt und
belichtet diese entsprechend der Aktivität der einzelnen Proben. Die Fotoplatte wird nach einer vorgegebenen Belichtungszeit entwickelt und zeigt ein
Schwärzungsmuster entsprechend den Aktivitäten der
entn-ommenen Proben. Dabei wird um den defekten
Brennstab das Zentrum einer erhöhten Schwärzung
liegen, und da die Fotoplatte ein exaktes Abbild
des Bündels enthält, ist der defekte Brennstab auf
diese Weise sofort zu identifizieren. Die Abbildung
des Brennstabbündels auf einer Fotoplatte ist ein
einfaches und an die jeweiligen Bedingungen gut anpaßbares Verfahren, welches im Vergleich zu einer
Vielzahl von strahlungsempfindlichen Detektoren wenig aufwendig ist und sich zur Dokumentation gut
eignet. Es hängt im wesentlichen von den nachzuweisenden Isotopen und deren Lebensdauer ab, für welche
Strahlungsart die Fotoplatte besonders ausgelegt
wird.

In weiterer Ausgestaltung der Erfindung wird vorgeschlagen, die Abstrichvorrichtung bei der Probenentnahme einige Male hin- und herzubewegen. Dies beseitigt verschiedene Zufälligkeiten bei der Probenentnahme und bewirkt einen besonders gleichmäßigen Abrieb an jeder Spitze.

In zusätzlicher Ausgestaltung kann die Probenentnahme
gemäß dem Anspruch 4 auch durch Ultraschalleinstrahlung unterstützt werden. Es ist bekannt, daß Ultraschall bei der Reinigung und Ablösung von Oberflächenschichten unterstützend eingesetzt werden kann. Diese Wirkung ist auch bei der Probenentnahme hilfreich. Zusätzlich kann, wie im Anspruch 5 vorgeschlagen, ein Lösungsmittel bei der Probenentnahme eingesetzt werden. Durch
Benetzen der Brennstabspitzen vor oder bei der Probenentnahme mit einem für die nachzuweisenden Ablagerungen spezifischen Lösungsmittel können gleichmäßige Probenabstriche
erzielt werden. Ein Haftmittel hilft ebenfalls bei der
Vermeidung von Schwankungen der entnommenen Probenmenge.

Im Anspruch 6 wird eine Abstrichvorrichtung zur Durchführung des beschriebenen Verfahrens angegeben, welche aus
einer dem Bündel in der Form angepaßten elastischen Matte
besteht. Diese Matte kann gegen die Spitzen der Brennstäbe
eines Bündels gedrückt werden, wobei die Elastizität bewirkt, daß auch bei etwa ungleich hervorstehenden Spitzen
eine gleichmäßige Probenentnahme bewerkstelligt wird.

Zur Unterstützung der Probenentnahme kann die elastische
Matte gemäß dem Anspruch 7 mit einem Material zur Erhöhung der Reibung versehen sein, insbesondere mit einem
Schleifmittel. Bei der Oberflächenbearbeitung von Werkstücken sind elastische Materialien mit eingelagertem
Schleifmittel gebräuchlich.

In weiterer Ausgestaltung der Erfindung, insbesondere für
den Fall, daß die Spitzen der Brennstäbe sehr ungleich
hoch heraustehen, wird gemäß dem Anspruch 8 vorgeschlagen,
die elastische Matte mit Öffnungen zu versehen, welche entsprechend dem Muster der Brennstäbe angeordnet sind und in
die die Spitzen der Brennstäbe teilweise einschiebbar sind.
Auf diese Weise kann eine noch gleichmäßigere Probenentnahme erreicht werden, welche für eine präzise Lokalisierung des defekten Brennstabes wichtig ist. Außerdem wird
auf diese Weise erreicht, daß nicht nur die Aktivität von
der Spitze, sondern auch von den Flanken der Brennstäbe mit abgetragen wird, was eine Erhöhung der Nachweisempfindlichkeit zur Folge hat.

Im Anspruch 9 wird dazu vorgeschlagen, die Öffnungen kreuzschlitzförmig zu gestalten. In diesem Falle bewirken die Ecken des Kreuzschlitzes beim Einschieben der Spitze des Brennstabes einen Abrieb mit relativ hoher Anpreßkraft auf einer kleinen Fläche, wodurch eine günstige Beeinflussung der entnommenen Probenmenge erreicht wird.

Alternativ dazu wird im Anspruch 10 vorgeschlagen, in der elastischen Matte Öffnungen von ganz spezieller Form anzubringen. Diese Öffnungen sollen auf der dem Bündel abgewandten Seite der elastischen Matte größer als der Durchmesser der Brennstäbe sein, so daß auf dieser Seite keine Berührung des Brennstabes mit der Matte mehr möglich ist. Auf der dem Bündel zugewandten Seite der elastischen Matte sind die Öffnungen kleiner als der Durchmesser der Brennstäbe, und die Öffnungen sind von einer Lippe umrandet. Diese Ausgestaltung hat wiederum zur Folge, daß auch bei ungleichmäßig herausstehenden Brennstäben beim Andrücken und Hin- und Herbewegen der Matte von jedem Brennstab etwa gleichviel Material abgetragen wird, so daß ein zuverlässiges Auffinden des defekten Brennstabes möglich wird.

Im Anspruch 11 wird in weiterer Ausgestaltung dazu vorgeschlagen, die lippenförmige Umrandung kantig auszugestalten, wodurch, wie in der Zeichnung näher erläutert wird, beim Einschieben der Brennstabspitzen ähnlich wie beim Kreuzschlitz ein erhöhter Abrieb an den Flanken des Brennstabes bewirkt wird. Entscheidend

-6-

ist dabei auch, daß die abgetragene Probe am unteren
Rand der Abstrichvorrichtung klebt, was insbesondere
beim Nachweis von $\alpha$-Strahlern von entscheidender
Bedeutung ist.

Ein Ausführungsbeispiel der Erfindung wird in der Zeichnung dargestellt und zwar zeigt

Fig. 1 die Spitze eines Brennstabbündels, aus welchem
schon einige Brennstäbe entnommen sind und

Fig. 2 eine aus einer elastischen Matte bestehende Abstrichvorrichtung und

Fig. 3 die Wirkungsweise der Abstrichvorrichtung bei
der Probenentnahme.

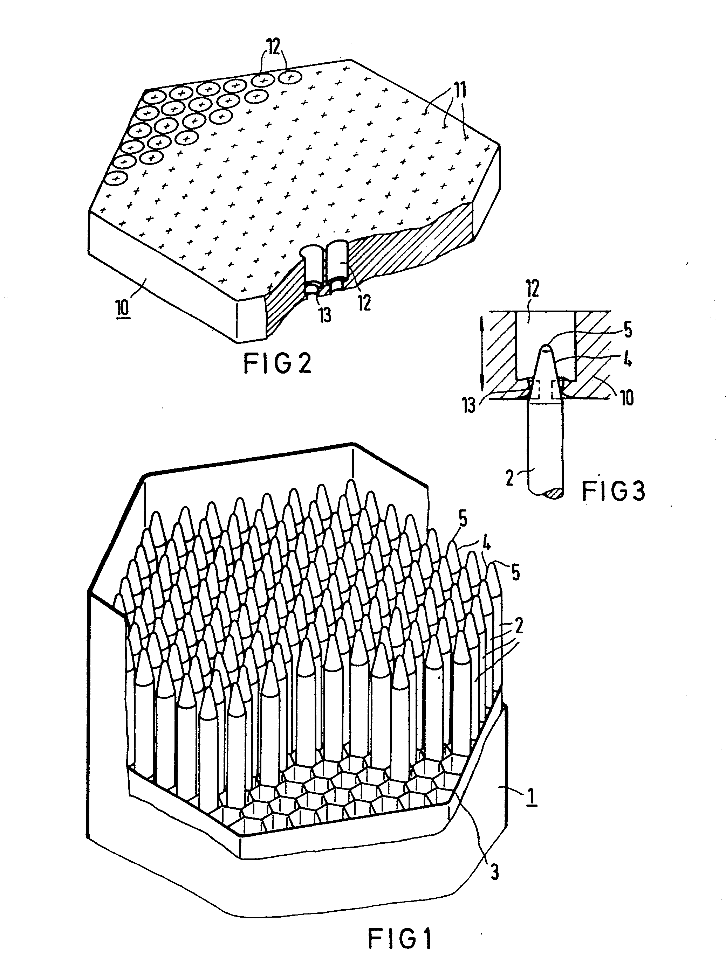

Fig. 1 zeigt den oberen Teil eines Brennelementes 1,
wobei eine Vielzahl von Brennstäben 2 in einem Hüllkasten 3 mit entsprechenden Halterungen eingebaut ist.
Jeder Brennstab läuft an seinem Ende konisch 4 in einer
abgerundeten Spitze 5 aus.

In Fig. 2 ist eine in der Form dem Brennstabbündel
angepaßte elastische Matte 10 dargestellt, welche mit
Öffnungen 11, entsprechend dem Muster der Anordnung
der Brennstäbe, versehen ist. Die Öffnungen sind auf
der dem Brennstabbündel bei der Probenentnahme abgewandten Seite wie Sackbohrungen 12 angelegt, deren
Durchmesser größer als der des Brennstabes ist. Im
Boden dieser Sacklöcher ist jeweils eine weitere Bohrung angebracht, welche einen kleineren Durchmesser
als die Brennstäbe hat. Auf diese Weise entstehen in
jeder Öffnung 11 am Probenentnahmeende Lippen 13,
welche ein gleichmäßiges Abstreifen von Material bewirken sollen.

Die Funktionsweise einer einzelnen Probenentnahmeöffnung ist in Fig. 3 dargestellt. Das Sackloch 12
in der elastischen Matte 10 wird unten von Lippen 13
umrandet, welche kantig ausgelegt sind. In der Fig.3
ist die Ruhelage dieser Lippen 13 gestrichelt dargestellt. Wird nun ein Brennstab 2 mit seiner Spitze 5
in die Öffnung geschoben, so reiben die Kanten der
etwas nachgebenden Lippe 13 über die Flanke 4 des
Brennstabendes. Bei mehrmaligem Hin- und Herschieben
wird dabei genügend Material abgetragen. Schiebt man
die Matte beim ersten Aufsetzen weit genug auf die
Brennstäbe, so daß auch tiefer liegende Brennstabspitzen von den Lippen gut berührt werden und bewegt
die Matte dann einige Male leicht hin und her, so
wird auch bei unterschiedlich herausragenden Brennstäben etwa gleich viel Material von der Flanke 4
abgetragen. Anschließend kann die elastische Matte
abgenommen und zum Nachweis der Radioaktivität an
den einzelnen Entnahmeöffnungen auf eine Fotoplatte
gelegt werden.

Die erfindungsgemäße Ausführung ermöglicht eine
Lokalisierung eines defekten Brennstabes ohne Zerlegen des ganzen Bündels bis zum Auffinden des Fehlers.
Der defekte Brennstab kann, gegebenenfalls mit einigen
Stäben der Umgebung gezielt ausgebaut werden.

82 P 6 7 4 4 E

INTERATOM                    -8-

Internationale Atomreaktorbau GmbH

D-5060 Bergisch Gladbach 1

<u>Verfahren und Vorrichtung zum Auffinden eines defekten Brennstabes in einem Bündel</u>

<u>Patentansprüche</u>

1. Verfahren zum Auffinden eines defekten Brennstabes (2) in einem Bündel (1), g e k e n n z e i c h n e t d u r c h  folgende Merkmale:

a) Mit einer Probeabstrichvorrichtung (10) wird im Flankenbereich (4) der Spitze (5) jedes Brennstabes (2) etwa gleich viel Material abgetragen.

b) Die Radioaktivitäten aller Proben werden relativ zueinander gemessen.

c) Eine erhöhte Radioaktivität einer oder mehrerer Proben dient als Hinweis auf den Ort eines defekten Brennstabes.

2. Verfahren nach Anspruch 1, g e k e n n z e i c h n e t d u r c h  folgende Merkmale:

a) Die Proben werden mit Hilfe einer in ihrer Form dem Brennstabbündel (1) angepaßten Abstrichvorrichtung (10) alle gleichzeitig unter möglichst gleichen Bedingungen entnommen.

b) Die Abstrichvorrichtung (10) wird anschließend auf eine $\alpha$-, $\beta$- oder $\gamma$-strahlungsempfindliche Fotoplatte gelegt.

c) Die Fotoplatte wird nach einer vorgegebenen Belichtungszeigt entwickelt und zeigt ein Schwärzungsmuster entsprechend den Aktivitäten der entnommenen Proben.

18.11.82 Nw/Pa

-9-

d) Im Zentrum einer erhöhten Schwärzung ist der defekte Brennstab zu suchen, wobei sein Ort durch das exakte Abbild des Bündels auf der Fotoplatte direkt auffindbar ist.

3. Verfahren nach Anspruch 2, g e k e n n z e i c h n e t d u r c h folgendes Merkmal:

a) Die Abstrichvorrichtung (1) wird bei der Probenentnahme einige Male hin- und herbewegt.

4. Verfahren nach Anspruch 2 oder 3, g e k e n n z e i c h n e t d u r c h folgendes Merkmal:

a) Die Probenentnahme wird durch Ultraschall-Einstrahlung unterstützt.

5. Verfahren nach einem der vorhergehengenden Ansprüche, g e k e n n z e i c h n e t d u r c h folgendes Merkmal:

a) Die Probenentnahme wird durch Benetzen der Brennstabspitzen mit einem für die nachzuweisenden Isotope spezifischen Lösungsmittel oder durch ein Haftmittel unterstützt.

6. Abstrichvorrichtung zur Durchführung des Verfahrens nach einem der vorhergehenden Ansprüche, g e k e n n - z e i c h n e t d u r c h folgendes Merkmal:

a) Die Abstrichvorrichtung besteht aus einer dem Bündel (1) in der Form angepaßten, elastischen Matte (10), welche gegen die Spitzen (5) der Brennstäbe (2) eines Bündels gedrückt werden kann.

7. Abstrichvorrichtung nach Anspruch 6, g e k e n n - z e i c h n e t d u r c h folgendes Merkmal:

a) Die elastische Matte (10) enthält ein Material zur Erhöhung der Reibung, insbesondere ein Schleifmittel.

8. Abstrichvorrichtung nach Anspruch 6 oder 7, g e -

-10-

k e n n z e i c h n e t   d u r c h   folgendes Merkmal:

a) Die elastische Matte (10) weist Öffnungen (11) auf, die entsprechend dem Muster der Brennstäbe (2) angeordnet sind und in die die Spitzen (5) der Brennstäbe (2) teilweise einschiebbar sind.


9. Abstrichvorrichtung nach Anspruch 8, g e k e n n - z e i c h n e t   d u r c h   folgendes Merkmal:

a) Die Öffnungen (11) haben die Form eines Kreuzschlitzes.


10. Abstrichvorrichtung nach Anspruch 8, g e k e n n - z e i c h n e t   d u r c h   folgende Merkmale:

a) Die Öffnungen (11) sind auf der dem Bündel (1) abgewandten Seite der elastischen Matte (10) größer (12) als der Durchmesser der Brennstäbe (2).

b) Die Öffnungen (11) sind auf der dem Bündel (1) zugewandten Seite der elastischen Matte (10) kleiner als der Durchmesser der Brennstäbe (2).

c) Die Öffnungen (11) sind an der dem Bündel zugekehrten Seite lippenförmig (13) umrandet.


11. Abstrichvorrichtung nach Anspruch 10, g e k e n n - z e i c h n e t   d u r c h   folgendes Merkmal:

a) Die lippenförmige Umrandung (13) der Öffnungen (11) weist Kanten auf, welche beim Einschieben der Brennstabspitzen (5) einen erhöhten Abrieb an den Flanken (4) des Brennstabes (2) bewirken.

FIG 2

FIG 3

FIG 1

Europäisches
Patentamt

**EUROPÄISCHER RECHERCHENBERICHT**

**0111816**
Nummer der Anmeldung

EP  83 11 2212

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 504 307  (FRAMATOME) <br> *  Seite 1; Seite 2, Zeilen 1-20; Anspruch 1 * | 1 | G 21 C   17/06 |
| A | DE-A-2 105 065  (LICENTIA) <br> * Anspruch 1 * | 1 | |
| A | US-A-4 051 369  (I. TAKESHITA) <br> * Zusammenfassung * | 1,2 | |
| A | FR-A-2 341 182  (WESTINGHOUSE) <br> *  Seite  6,  Zeilen  5-19; Abbildungen 3,4 * | 6 | |
| A | FR-A-1 552 845  (C.E.A.) | | |
| A | EP-A-0 033 074  (KRAFTWERK UNION) | | **RECHERCHIERTE SACHGEBIETE (Int. Cl. ³)** <br><br> G 21 C   17/00 <br> G 01 N    1/00 |

Der vorliegende Recherchenbericht wurde für alle Patentansprüche erstellt.

| Recherchenort <br> DEN HAAG | Abschlußdatum der Recherche <br> 16-03-1984 | Prüfer <br> ASSI G.A. |
|---|---|---|